# EUROPEAN PATENT SPECIFICATION

(11) **EP 2 584 909 B1**
(45) Date of publication and mention of the grant of the patent: **16.11.2016**
(21) Application number: 11729443.9
(22) Date of filing: 22.06.2011
(51) Int. Cl.: A23G 1/00, A23G 3/00, A23G 3/54, A23G 1/54, A21D 13/00, A23C 19/09, A23G 4/20, A23G 1/20, A23C 19/08, A23G 3/34, A23G 4/04

(54) **CONVOLUTED FOOD BAR AND METHOD FOR PRODUCING IT**
GEWUNDENER ESSRIEGEL UND HERSTELLUNGSVERFAHREN DAFÜR
BARRE D'ALIMENT ENTRELACÉE ET PROCÉDÉ DE FABRICATION CORRESPONDANT

(30) Priority: 25.10.2010 GB 201018017; 22.06.2010 GB 201010510
(43) Date of publication of application: 01.05.2013
(73) Proprietor: Cadbury UK Limited, Birmingham B30 2LU (GB)
(72) Inventor: BUFTON, Andrew, Buckinghamshire HP22 5UR (GB)
(74) Representative: Ward, David Ian
(86) International application number: PCT/GB2011/000940
(87) International publication number: WO 2011/161410

(56) References cited:
- EP-A1- 0 044 689
- DE-A1- 3 910 985
- JP-A- 10 295 274
- US-A- 4 913 645

## Description

The present invention relates to a method for the manufacture of a food bar and a food bar obtainable by the method.

There is a need within the food industry to develop new and interesting food products in order to capture the interest of the consumer. In particular, there is a need to create versions of existing food products having improved or different tastes and textures. However, the resulting complexity of such products can mean that required manufacturing equipment and/or processes are also complex, increasing the cost of manufacturing and hence the resulting cost to the consumer. There is therefore also a need for methods of manufacture for such products which are relatively simple to operate.

These needs are especially apparent in the field of confectionery, which is frequently bought by or for children. The appearance and texture of a product may be of particular importance in attracting the attention of such consumers. At the same time, cost is likely to be an important factor in the choices of these consumers, and so it is important that the use of novel appearances and/or textures does not significantly increase costs of production.

According to an aspect related to the present invention there is provided a food bar having a first end and a second end and a length defined from the first end to the second end;
the food bar comprising a plurality of strands of foodstuff;
wherein the foodstuff is chocolate, at least one strand of chocolate extends from the first end to the second end and at least one strand of chocolate is convoluted.

According to a first aspect of the present invention there is provided a food bar having a first end and a second end and a length defined from the first end to the second end; the food bar comprising a plurality of strands of foodstuff;
wherein at least one strand of foodstuff extends from the first end to the second end and at least one strand of foodstuff is transversely convoluted, and wherein at least one strand is irregularly convoluted.

Although various types of food products are described in the art, none has the features described above.

GB 2 186 836 A describes an extrusion die head for producing a chocolate bar comprising a multiplicity of spaced air injectors extending from an apertured plate. During extrusion chocolate is forced through the apertures and surrounds the injectors to produce a single chocolate extrudate having a plurality of hollow passages therein. Thus, the product does not comprise a plurality of strands as required herein.

EP 0 321 449 A describes an extrusion method for producing a chocolate bar. An array of chocolate filaments are extruded and deposited onto a support that moves back and forth beneath the extruder to build up multiple layers of the filaments. The support has a semi-circular cross section such that a curved shell of the filaments is formed and two such shells are subsequently combined to form a chocolate bar. Thus, this document does not disclose a food bar having at least one strand which extends from the first end to the second end.

US 2009/0136625 describes a food product containing a mat of food fibres. JP 10-113124 describes a moulded confection comprising heaped strands of chocolate. There is no disclosure of a food bar having at least one strand that extends between the ends of the bar.

US 5,000,969 and US 2004/0258820 A1 both describe layered ice cream products having overlapping folds along their lengths. DE 34 36 578 C1 describes a layered ice cream product with gently rippled layers. There is no disclosure of a food bar having at least one transversely convoluted strand, or of a chocolate bar comprising at least one convoluted strand of chocolate.

WO 2008/042750 describes a single extruded rope of food material. EP 0 044 689 discloses a single twisted rope of confectionery material. EP 0 402 178 A2 describes a single folded ribbon of vegetable material. JP 10-295274 discloses a single chocolate coil. EP 1 880 617 discloses a single undulating strand of fruit material. WO 2010/133835 A1 describes a bar comprising a folded chocolate sheet. None of these documents discloses a food bar comprising a plurality of strands.

DE 39 10 985 A1 discloses a product comprising a plurality of layers of ice-cream arranged in a fan shape, wherein each layer has a regular wave pattern.

US 4 913 645 A discloses an apparatus for producing decorative pastry products. The products are formed by extrusion of foodstuff through a nozzle onto a conveyor belt. The orifice of the nozzle describes a curved trajectory to form a continuous, regular wound strand of foodstuff.

It will be understood that the products of the invention are bars; that is, they are generally elongate in shape. The bars may have any suitable shape of cross-section. In some embodiments, the bar has a cross-section perpendicular to the longitudinal axis which is generally oval, circular, rectangular or square in shape. It will be understood that, due to the nature of the product, the external surface of the bar may not be smooth, and so may not correspond exactly to the perimeter of the cross-sectional shape. Thus, in some embodiments, at least one external surface of the bar is not smooth. In some further embodiments, none of the external surfaces of the bar are smooth. For example, non-smooth surfaces may be pitted as a result of convolutions in the strands making up the surface. Nevertheless, it will be readily apparent to the skilled reader that the cross-sectional shape is that corresponding generally to shape of the boundary of the cross-sectional area.

As used herein, the term 'a plurality of strands' has its ordinary meaning and is to be understood as requiring at least two strands which are distinct, i.e. not in continuous contact with each other over the entire length of the strands. The requirement is therefore to be distinguished over situations in which multiple threads are tightly woven or wound together to form a single rope-like strand.

In some embodiments, each of the plurality of convoluted strands in the bar may contact at least one, at least two, at least 5, or at least 50% of the other convoluted strands at at least one point along the length of each strand.

A convoluted strand of foodstuff is not merely a strand that is non-linear or curved, it is wavy or coiled. In the context of the present invention, a convoluted strand of foodstuff may curve to such an extent that it turns at at least one point along its length at an angle of at least 60°, at least 70°, at least 80°, at least 85° or at least 90° to the direction of the length of the bar. Alternatively or in addition, a convoluted foodstuff strand may curve to such an extent that it reverses its direction at at least one point along its length. In some embodiments, the convoluted foodstuff strand makes contact with itself at at least one point along its length. In some embodiments the convoluted foodstuff strand makes contact with another foodstuff strand at at least one point along its length.

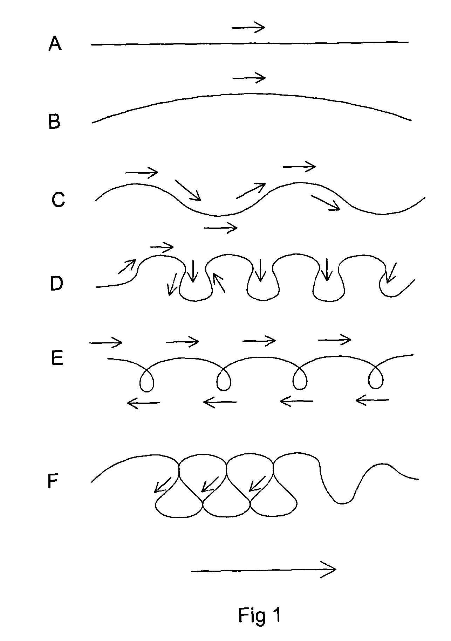

Figure 1 shows 6 chocolate strands A to F and provides further explanation of what is meant by a convoluted chocolate strand. All of the strands can be considered to have a general direction from left to right as shown by the large arrow (which also represents the direction of the length of the bar). Strands A to C are not convoluted; the direction of the strand is always from left to right. Each of strands D to F are convoluted; the direction of the strand is from right to left at certain points along its length and in all cases the strands turn at an angle greater than 90° to the direction of the length of the bar at multiple points.. In addition, strands E and F each have points where the strand makes contact with itself.

At least one convoluted foodstuff strand is irregularly convoluted. As used herein, the term 'irregularly convoluted is intended to mean that the strand has at least two different curvatures along its length; that is, it may be other than regularly coiled along its entire length. Alternatively or additionally, the plurality of foodstuff strands may comprise a plurality of convoluted strands, wherein at least one convoluted strand has a curvature at some point along its length which is different to the curvature of a second convoluted strand at a point along its length. In some further embodiments, the two different curvatures may differ in terms of the angular orientation of the curvature around the longitudinal axis of the bar. Alternatively or additionally, the two different curvatures may differ in terms of the degree of curvature. In some still further embodiments, one curvature may have a degree of curvature (in terms of angular displacement per unit length, such as degrees per mm) which is at least 1.5 times, at least 2 times, at least 2.5 times, at least 3 times, at least 4 times or at least 5 times the degree of curvature of a second curvature.

The first aspect of the invention requires a strand which is transversely convoluted. In some embodiments of the related aspect of the invention, at least one chocolate strand is transversely convoluted. As used herein, the term 'transversely convoluted' is intended to mean that the axis of at least one convolution should be oriented at least 45°, at least 50°, at least 60°, at least 65°, at least 70°, at least 80°, at least 85° or at least 90° from the longitudinal axis of the bar. It will be understood that the axis of a convolution is the axis normal to the strand of foodstuff (or chocolate) (i.e. perpendicular to the strand and within the same plane as the strand) at a local maximum curvature between two local minimum curvatures. In the case of strands where the rate of curvature is constant, the axis normal to the strand at all points along the length of the strand should be oriented at least 45°, at least 50°, at least 60°, at least 65°, at least 70°, at least 80°, at least 85° or at least 90° from the longitudinal axis of the bar.

In some embodiments the food bar has a flat base. In some further embodiments, at least 50%, at least 60%, at least 70%, at least 75%, at least 80%, at least 85%, at least 90%, at least 95% or 100% of the convoluted strands of foodstuff are substantially parallel to the base along at least 75%, at least 80%, at least 85%, at least 90%, at least 95%, or 100% of the length of each strand. As used herein, 'substantially parallel' is intended to mean that the angle between the plane containing the local section of strand and the plane of the base is no more than 25°, no more than 20°, no more than 15°, no more than 10°, or no more than 5°. In particular, the bar may comprise transversely convoluted strands substantially parallel to the base.

It will be understood that a flat base need not be continuously flat across the full area of the base (although this may be the case in some embodiments). Rather, it simply indicates that the bar has a plurality of co-planar surfaces on the base. In some embodiments, the co-planar surfaces are evenly distributed across the base of the bar.

In some embodiments, the bar comprises a layer of convoluted strands. It will be understood that a layer of strands comprises a plurality of strands lying substantially within a single plane. It will be further understood that, in order for the strands to lie within a single plane, the convolutions of the strands must lie substantially in the plane. In some further embodiments, the bar comprises a plurality of such layers. In some still further embodiments, the plurality of layers are displaced relative to one another along an axis which is at least 45°, at least 50°, at least 60°, at least 70°, at least 80°, at least 85°, or substantially 90° to the longitudinal axis defined by the length of the bar. In some still further embodiments, the bar comprises at least a first layer and a second layer of convoluted strands, and the number of strands in the first layer is different to the number of strands in the second layer. Alternatively or additionally, the bar comprises at least a first layer and a a second layer of convoluted strands, and the strands of the first layer differ from those of the second layer in at least one of length, diameter, and cross-sectional shape.

In some embodiments, the bar comprises at least 3, at least 4, or at least 5 strands. It will be understood that, due to the nature of the product, the number of layers may not necessarily be constant along the length of the bar (although in some embodiments this may be the case). Rather, the bar should have the specified number of layers at at least one point along its length. In some further embodiments, the bar has the specified number of layers (i.e. at least 3, at least 4 or at least 5) for at least 25%, at least 50%, at least 75% or at least 90% of its length.

It will be understood that, even in embodiments comprising a layer of convoluted strands, there may be individual strands which, whilst generally lying within the layer, have portions which extend out of that layer, without affecting the layered nature of the bar. Typically, at any point along the length of the bar, at least 60%, at least 70%, at least 80%, at least 90%, or at least 95% of the strands making up the layer will lie within the plane of the layer. It will be further understood that the nature of the convoluted strands is such that strands may occasionally move between different layers along their length. Nevertheless, in general, it will be possible to identify layers of strands within the bar.

In some embodiments, the bar comprises at least first and second convoluted strands, wherein the first and second convoluted strands have different geometries. It will be understood that strands have different geometries if they are not superimposable. Thus, for example, the geometries may relate to the number, size and shape of convolutions, or to differences in the cross-sectional size and shape of the strands themselves. In some embodiments, every convoluted strand in the bar has a different geometry to every other convoluted strand. In some embodiments, there are no strands of foodstuff which are not convoluted.

In some embodiments, at least one strand of foodstuff is longer than the food bar. In some further embodiments, at least one strand of foodstuff extends from the first end to the second end of the food bar and is longer than the food bar.

In some embodiments, at least 5 foodstuff strands are longer than the food bar. In some further embodiments, at least 10, at least 15, at least 20, at least 25, at least 30, at least 35 or at least 40 foodstuff strands are longer than the food bar. In some still further embodiments substantially all of the foodstuff strands are longer than the food bar. A small number of strands may be shorter than the food bar due to breakage. In some embodiments, at least 80%, at least 90% or at least 95% of the foodstuff strands extend from the first end to the second end of the food bar.

In some embodiments, at least 5 foodstuff strands extend from the first end to the second end of the food bar. In some further embodiments, at least 10, at least 15, at least 20, at least 25, at least 30, at least 35 or at least 40 foodstuff strands extend from the first end to the second end. In some still further embodiments substantially all of the foodstuff strands extend from the first end to the second end of the food bar. A small number of strands may not extend the full length of the bar due to breakage. In some embodiments, at least 80%, at least 90% or at least 95% of the foodstuff strands extend from the first end to the second end of the food bar.

In some embodiments, at least 3 foodstuff strands are convoluted. In some further embodiments, at least 5, at least 10, at least 15, at least 20, at least 25, at least 30, at least 35 or at least 40 foodstuff strands are convoluted. In some still further embodiments substantially all of the foodstuff strands are convoluted.

In some embodiments at least one of the strands is less than 50% or more than 150% of the length of at least one other strand. In some embodiments substantially all of the foodstuff strands have substantially the same length. Substantially the same length may be defined as +/-40%, +/-30%, +/- 20%, +/-10% or +/-5% of the mean length of the strands. There may be some variation due to breakage. In some embodiments, at least 80%, at least 90% or at least 95% of the foodstuff strands have substantially the same length.

In some embodiments, at least one strand is at least 115%, at least 125%, at least 135%, at least 150%, or even at least 200% of the length of the bar.

A width and a height can also be defined for the food bar. The length, width and height of the food bar are mutually perpendicular.

In some embodiments, the length is at least as great as the width. In some embodiments, the length and the width are substantially equal i.e. the food bar is approximately square. In some alternative embodiments, the length is at least 2, at least 3, at least 4, at least 5, at least 6, at least 7 or at least 8 times greater than the width. In some embodiments, the length is no more than 15, no more than 10, no more than 8, no more than 6, no more than 5, no more than 4 or no more than 3 times greater than the width. In some embodiments, the length is from 3 to 5 times greater than the width.

In some embodiments, the bar comprises convoluted strands having convolutions substantially parallel to the width. For example, at least 50%, at least 60%, at least 70%, at least 75%, at least 80%, at least 85%, at least 90%, at least 95% or 100% of the convoluted strands of foodstuff may be substantially parallel to the width along at least 75%, at least 80%, at least 85%, at least 90%, at least 95%, or 100% of the length of each strand. As used herein, 'substantially parallel' is intended to mean that the angle between the plane containing the local section of strand and the plane of the width is no more than 25°, no more than 20°, no more than 15°, no more than 10°, or no more than 5°.

In some embodiments, the food bar comprises at least a first layer and a second layer, each layer comprising a plurality of convoluted strands, wherein at least one of the first layer and second layer has a width which is less than the width of the bar. In some still further embodiments, the first layer has a width that is less than that of the second layer. For example, the first layer may have a width which is less than 95%, less than 90%, less than 85%, less than 80%, or less than 75% of the width of the bar or the second layer.

In some embodiments, the length is at least as great as the height. In some embodiments, the length and the height are substantially equal. In some alternative embodiments, the length is at least 2, at least 3, at least 4, at least 6, at least 7, at least 8 or at least 10 times greater than the height. In some embodiments, the length is no more than 15, no more than 12, no more than 8, no more than 6, no more than 5, no more than 4 or no more than 3 times greater than the height. In some embodiments, the length is from 7 to 10 times greater than the height.

In some embodiments, the food bar has a length of at least 100 mm. In some embodiments, the food bar has a length of no more than 200 mm, no more than 170 mm, no more than 150 mm, or no more than 130 mm. In some embodiments, the food bar has a width of from 25 to 35 mm. In some embodiments, the food bar has a height of from 10 to 20 mm.

In some alternative embodiments, the food bar has a length of from 10 to 40 mm, a width of from 10 to 30 mm and a height of from 10 to 20 mm.

In some embodiments the food bar has a mass of from 25 to 60 g, or from 35 to 45 g. In some alternative embodiments the food bar has a mass of from 2 to 25g, from 4 to 20 g, or from 6 to 15 g. In other alternative embodiments, the food bar has a mass of from 50 to 150 g, from 60 to 120 g, or from 70 to 100 g. It will be appreciated that the mass of the food bar is dependent not only on the size, but also on the composition of the food bar. Thus, for example, a food product comprising processed cheese may in some embodiments have a mass of from 10 to 25 g; and a food product comprising a baked dough may have a mass of from 25 to 60 g. Other product sizes and weights will be readily apparent to the skilled person.

The food bar of the present invention has a first end and second end and a length defined from the first end to the second end. In some embodiments, the food bar has a substantially consistent width along its length. Since the product comprises a plurality of strands of foodstuff which may be arranged in an irregular formation there will be minor variation along the length. Substantially the same width can be defined as +/-25%, +/-20%, +/-15%, +/-10% or +/-5% of the mean width of the bar.

The food bar of the present invention has a first end and second end and a length defined from the first end to the second end. In some embodiments, the food bar has a substantially consistent height along its length. Since the product comprises a plurality of strands of foodstuff which may be arranged in an irregular formation there will be minor variation along the length. Substantially the same height can be defined as +/-25%, +/-20%, +/-15%, +/-10%, +/-5% of the mean height of the bar.

In some embodiments substantially all of the foodstuff strands have the substantially same diameter (thickness) +/-10%. In some alternative embodiments, the foodstuff strands have a range of diameters. As used herein, 'diameter' is used to refer to the maximum thickness of the foodstuff strand regardless of cross-sectional shape (i.e. not limited to circular cross-sections).

In some embodiments, at least one foodstuff strand has, or substantially all strands have, a diameter of at least 1 mm, at least 1.5 mm, at least 2 mm, at least 3 mm, or at least 5 mm. In some embodiments, at least one foodstuff strand has, or at least all strands have, a diameter of no more than 15 mm, no more than 10 mm, no more than 8 mm, no more than 6 mm, no more than 4 mm, no more than 3 mm or no more than 2 mm. In some embodiments, at least one foodstuff strand has, or substantially all strands have, a diameter of from 1 mm to 5 mm, from 1.5 mm to 3 mm, or of from 1.7 mm to 2 mm. Smaller diameters may result in gaps or breakages in the strand and/or blockages in the apparatus. Larger diameters may result in strands of foodstuff that fail to coil adequately.

The aspect related to the invention requires a chocolate bar. The food bar of the first aspect may be any suitable foodstuff. In some embodiments, the food bar of the first aspect comprises a plurality of strands of non-chocolate foodstuff. In some alternative embodiments, the food bar of the first aspect comprises a plurality of chocolate strands. The food bar may be for human consumption or animal consumption.

In some embodiments, all of the strands of the food bar are made from a single type of foodstuff. In some alternative embodiments, the food bar comprises two or more different types of foodstuffs.

The foodstuff may be savoury or it may be sweet. In embodiments in which the food bar comprises two or more different types of foodstuffs, each type of foodstuff may be savoury, or each type may be sweet. In some embodiments, the food bar comprises a mixture of savoury and sweet foodstuffs.

According to a second aspect of the invention, there is provided a method for preparing a food bar according to the first aspect of the invention, comprising:
extruding a foodstuff through a die having a plurality of apertures therein to form a plurality of strands of foodstuff;
supplying the strands of foodstuff to a deposit location, wherein the strands of foodstuff are moving at a first speed;
depositing the strands of foodstuff from the deposit location onto a surface that is continuously moving away from the deposit location to form the food bar, the surface moving away from the deposit location at a second speed;
wherein the first speed is greater than the second speed.

The strands (strands of foodstuff) at the deposit location are moving more quickly than the surface is moving away from deposit location. This causes the strands to bend and compact together thereby forming an attractive wavy or coiled (i.e. convoluted) pattern.

It will be understood that it is the relative motion between the deposit location and the extruded strands which is significant. Therefore the surface could be stationary whilst the deposit location moves along the surface. In practice it will be more convenient for the deposit location to remain stationary whilst the surface moves away. In one embodiment the surface is a conveyer belt or the surface is located upon a conveyer belt. In this way the food bar can be transported away from the extrusion apparatus for further processing (such as baking, cooling, packing etc.).

The movement of the strands at the deposit location may be assisted or unassisted. For example, the strands may arrive at the deposit location directly from the extrusion die, or via an intermediate surface. Where the strands arrive at the deposit location via an intermediate surface, the intermediate surface may be moving (such as an intermediate conveyor) or stationary. The speed of movement of the strands may therefore be controlled by several factors, including the speed of extrusion, the action of gravity, friction with an intermediate surface, and the speed of movement (if any) of the intermediate surface.

In an exemplary method according to this aspect, the die may be arranged to extrude strands vertically onto an inclined surface, the inclined surface converting the vertical motion of the strands into a motion at the deposit location having a horizontal component suitable for deposition onto a horizontal conveyor. Vertical arrangement of the extrusion die may result in a more compact apparatus.

In general, the lateral direction in which foodstuff is moving at the deposit location, and the direction of movement of the surface will be parallel. However, in some embodiments, the foodstuff strands at the deposit location may be moving in a direction at a laterally different angle from the direction in which the surface is moving. For example, where the moving surface is a conveyer belt, the foodstuff strands may be supplied to the deposit location so that they are moving in a lateral direction which is at 45° to the direction in which the conveyer belt is moving. In such a case, the speed at which the foodstuff strands are moving can be considered to have two components: one component in the direction in which the surface is moving and one component perpendicular to the direction in which the surface is moving. It will be understood that it is the component in the direction in which the surface is moving which leads to the strands of foodstuff being compacted and forming the wavy/coiled (convoluted) effect. Therefore when comparing the first speed and the second speed, it is important to measure both the first speed and the second speed in the same direction. For example, the speed of a conveyer belt (second speed) should be measured as compared to the speed at which the foodstuff strands at the deposit location are moving in the lateral direction of the conveyer belt.

Also provided is a method for preparing a food bar according to the first aspect of the invention, comprising:
extruding a foodstuff through a die having a plurality of apertures therein to form a plurality of strands of foodstuff, the foodstuff being extruded from the die at a first speed;
depositing the strands of foodstuff onto a surface that is continuously moving away from the die to form the food bar, the surface moving away from the die at a second speed;
wherein the first speed is greater than the second speed.

The strands (strands of foodstuff) are being extruded from the die more quickly than the surface is moving away from die. This causes the strands to bend and compact together thereby forming an attractive wavy or coiled (i.e. convoluted) pattern.

It will be understood that it is the relative motion between the die and the extruded strands which is significant. Therefore the surface could be stationary whilst the die moves away from the surface. In practice it will be more convenient for the die to remain stationary whilst the surface moves away. In one embodiment the surface is a conveyer belt or the surface is located upon a conveyer belt. In this way the food bar can be transported away from the extrusion apparatus for further processing (such as baking, cooling, packing etc.).

It will be understood that, in general, the foodstuff will be extruded directly onto the moving surface. In such embodiments, the extrusion die must be oriented at an angle other than perpendicular to the surface, so that the extrudate has a component of movement in a plane parallel to the moving surface. In general, the foodstuff will be extruded from the die and the surface will move away from the die in exactly the same direction. For example, where the foodstuff is extruded onto a conveyer belt, the direction of extrusion and the direction of movement of the belt will be parallel.

In some embodiments, the foodstuff is extruded at a laterally different angle from the direction in which the surface is moving. For example, where the foodstuff is extruded onto a conveyer belt, the die may be arranged so that the foodstuff is extruded at 45° to the direction in which the conveyer belt is moving. In such a case, the speed at which the foodstuff is being extruded can be considered to have two components: one component in the direction in which the surface is moving and one component perpendicular to the direction in which the surface is moving. It will be understood that it is the component in the direction in which the surface is moving which leads to the strands of foodstuff being compacted and forming the wavy/coiled (convoluted) effect. Therefore when comparing the first speed and the second speed, it is important to measure both the first speed and the second speed in the same direction. For example, the speed of a conveyer belt (second speed) should be measured as compared to the speed at which the foodstuff is being extruded in the direction of the conveyer belt.

It will be understood that, in the case of a method for preparing a food bar according to the related aspect of the invention, the foodstuff should be chocolate.

It will be understood that the alignment and orientation of the convolutions will depend on the shape and flexibility of the strands of foodstuff, and the differences between the first and second speeds. In order to ensure the formation of transverse convolutions, it may be desirable to use strands of extrudate having a width on the moving surface which is small relative to the desired radius of curvature of the convolution.
In some embodiments the foodstuff is continuously extruded through the die to produce a long food bar that is subsequently cut into portions of a desired length. In some alternative embodiments the foodstuff is extruded to form a food bar of a desired length and then extrusion is stopped for a period.

In some embodiments the strands are deposited onto a planar surface. In such embodiments the food bar will have a substantially flat base.

In some alternative embodiments, the strands may be deposited onto a shaped surface. In such embodiments, the shape of the food bar will be influenced by the shape of the surface. For example, the strands may be deposited into a longitudinal depression in a conveyor, to form a bar having a width defined by the width of the depression. In some further embodiments, the strands may be deposited within a mould cavity.

In some embodiments the foodstuff is extruded through the die at a speed (the first speed) of from 2 to 35 m/min, from 3 to 25 m/min or from 4 to 18 m/min.

In some embodiments the surface moves away from the die at a speed (the second speed) of from 1 to 20 m/min, from 2 to 15 m/min, or 2.5 to 10 m/min.

In some embodiments, the first speed is at least 10%, at least 30%, at least 50% or at least 70% greater than the second speed.

In some embodiments, the first speed is no more than 175%, no more than 150%, no more than 125% or no more than 100% greater than the second speed.

In some embodiments the foodstuff is extruded through at least 4, at least 7, at least 13, at least 19, at least 25, at least 35, at least 45, at least 60 or at least 80 apertures. In some embodiments the foodstuff is extruded through no more than 100, no more than 70, no more than 50, no more than 40, no more than 30, no more than 20 or no more than 10 apertures. In some further embodiments, the foodstuff is extruded through from 4 to 60, from 4 to 30, or from 4 to 20 apertures. In general, the number of strands in the product will be the same as the number of apertures.

In some embodiments the foodstuff may be extruded through a die having a plurality of apertures where the die additionally comprises a shaping plate having a shaping aperture therein. In this way the shaping plate may be used to define the cross-section of the resulting food bar. For example, the die may comprise a certain number of die apertures and a shaping plate is placed across the die such that a proportion of the apertures are blocked and a proportion are free (unblocked). The foodstuff will only be extruded through the 'free' apertures so it will be understood that only 'free' apertures should be considered when defining the characteristics (number, size, shape etc.) of the apertures in the die.

In some embodiments all of the die apertures have the same size, in which case each of the resulting strands will have the same diameter. As used herein, 'diameter' is used to refer to the maximum width of the aperture or strand regardless of cross-sectional shape (i.e. not limited to circular cross-sections). In alternative embodiments the die apertures may have a range of sizes in which case the resulting strands will have a range of diameters.

In some embodiments at least one die aperture has, or substantially all die apertures have, a diameter of at least 1 mm, at least 1.5 mm, at least 2 mm, at least 3 mm, or at least 5 mm. In some embodiments, at least one die aperture has, or substantially all die apertures have, a diameter of no more than 15 mm, no more than 10 mm, no more than 8 mm, no more than 6 mm, no more than 4 mm, no more than 3 mm or no more than 2 mm. In some embodiments, at least one die aperture has a diameter of from 1 mm to 5 mm, from 1.5 mm to 3 mm, or of from 1.7 mm to 2 mm. In some embodiments, at least one die aperture has, or substantially all die apertures have, a diameter of from 1.5 to 15 mm, of from 2 mm to 12 mm, of from 3 mm to 10 mm, or of from 4 mm to 8 mm. In some embodiments, at least one die aperture has a diameter of from 1.5 to 10 mm. It will be appreciated that, in producing a strand of foodstuff that coils to produce a successful food bar, the aperture size will depend on a number of factors including the type and nature of the foodstuff to be extruded. Aperture diameters which are too small for a particular foodstuff may result in blockages, and breakage of the foodstuff strand. Aperture diameters which are too large may result in strands of foodstuff that fail to coil. Thus, in some embodiments in which the foodstuff comprises cheese and/or dough, all die apertures have a diameter of at least 1.5 mm and no more than 15 mm, no more than 10 mm, no more than 8 mm or no more than 6 mm.

In some embodiments all of the die apertures have the same shape. In some alternative embodiments the die apertures may have a range of shapes. In some embodiments at least one aperture has a circular shape. In some further embodiments all of the apertures have a circular shape.

In some embodiments, the die apertures may be arranged in layers, so that layers of strands are extruded. In some embodiments, the apertures within a single layer have the same shape. In some further embodiments, the apertures within a first layer differ from those within a second layer.

The foodstuff may be extruded at room temperature, or it may be extruded at a temperature which is higher than that of room temperature. The temperature at which the foodstuff is extruded may be significantly higher than room temperature. In some embodiments, the foodstuff is extruded at a temperature of at least 15 °C, at least 20 °C, at least 25 °C, at least 30 °C, at least 50 °C or at least 60 °C. In another series of embodiments, the foodstuff is extruded at a temperature of less than 120 °C, less than 100 °C, less than 90 °C or less than 80 °C. Alternatively, it may be more convenient to extrude the foodstuff at a temperature below room temperature. In some embodiments, the foodstuff is extruded at a temperature of no more than 10 °C, no more than 7.5 °C or no more than 4.5 °C. It will be understood that the extrusion temperature will depend on the nature of the foodstuff to be extruded, in order to provide the required degrees of processability and stability.

In embodiments the foodstuff comprises processed cheese. In such embodiments, it may be convenient to extrude the cheese in a heated or molten state. In some embodiments, the processed cheese is a meltable processed cheese, i.e. the processed cheese should not have been treated by the process known as creaming which removes the meltability of the cheese and turns the cheese into a spreadable cheese. In some embodiments, the processed cheese is extruded at a temperature of at least 50 °C, at least 60 °C, at least 65 °C or at least 70 °C. In some embodiments, the processed cheese is extruded at a temperature of from 40 °C to 70 °C, from 50 °C to 65 °C or from 55 °C to 60 °C. Alternatively, it may be convenient to extrude the cheese below room temperature. In some embodiments, the cheese is extruded at a temperature of no more than 18 °C, no more than 15 °C, no more than 10 °C or no more than 8°C.

In some embodiments the foodstuff comprises dough. In some embodiments, the temperature of the dough during extrusion is less than 60 °C, less than 50 °C, less than 40 °C or less than 35 °C. Without wishing to be bound by theory, it is believed that the use of these temperatures ensures that any starches present in the dough composition, such as natural starches present in flour and the like, do not gelatinize; and further that any proteins present in the dough do not denature. In some further embodiments, the temperature of the dough during extrusion is from 15 °C to 40 °C, 18 °C to 30 °C or from 20 °C to 28 °C. Dough which is too warm or too cold may extrude satisfactorily result in a product which is difficult to handle. The desired dough extrusion temperature may achieved by maintenance of the temperature of the extruder below the desired temperature of the dough. Alternatively, the temperature of the dough may be controlled by the temperature of water added to the dough mixture.

In some embodiments the foodstuff comprises pet food. In such embodiments, the extrusion may be carried out at a temperature of from 30 °C to 200 °C, from 50 °C to 180 °C, from 80 °C to 170 °C or from 100 °C to 150 °C.

The methods for the manufacture of the food bar may further comprise additional processing steps after extrusion of the foodstuff to produce the food bar in its finished form. In some embodiments, the foodstuff is cooked after extrusion by baking, boiling or roasting or by other means.

In some embodiments, the extruded strands are proofed to allow the foodstuff to rise, for example where the foodstuff comprises dough. In some embodiments, the foodstuff is chilled or allowed to cool at room temperature for a period of time, such as for example to allow the foodstuff to set following extrusion. In some embodiments, toppings or coatings may be applied to the food bar. It will be understood that these additional processing steps may be present individually or in combination, and may occur in any suitable order. Where the method further comprises cooking of the foodstuff after extrusion, such cooking may take place before or after any of these processing steps.

The first embodiment requires a food bar comprising a plurality of chocolate strands. As such, the method of the second aspect may involve the extrusion of chocolate strands. The term 'chocolate' in the context of the present invention is not restricted by the various definitions of chocolate provided by government and regulatory bodies. A chocolate is simply a product obtained from cocoa products and sweeteners.

In one embodiment the chocolate is a chocolate obtained using the method defined in GB2186476 since this chocolate is particularly suitable for extrusion.

The chocolate may be a dark chocolate, a milk chocolate or a white chocolate. In the context of the present invention, a dark chocolate comprises cocoa liquor and/or powder and sweetener, a milk chocolate comprises cocoa liquor and/or cocoa powder, sweetener and milk solids and a white chocolate comprises cocoa butter and sweetener. In a particular embodiment, the chocolate composition is a milk chocolate composition.

The chocolate comprises at least one fat. The fat may be cocoa butter, butterfat, a cocoa butter equivalent (CBE), a cocoa butter replacer (CBR), a vegetable fat that is liquid at standard ambient temperature and pressure (SATP, 25°C and 100kPa) or any combination of the above. In a particular embodiment, the chocolate comprises cocoa butter.

CBE's are defined in Directive 2000/36/EC as complying with the following criteria:
a) they are non-lauric vegetable fats, which are rich in symmetrical monounsaturated triglycerides of the type POP, POSt and StOSt;
b) they are miscible in any proportion with cocoa butter, and are compatible with its physical properties (melting point and crystallisation temperature, melting rate, need for tempering phase);
c) they are obtained only by the processes of refining and/or fractionation, which excludes enzymatic modification of the triglyceride structure.

Suitable CBE's include illipe, Borneo tallow, tengkawang, palm oil, sal, shea, kokum gurgi and mango kernel. CBE's are usually used in combination with cocoa butter. In one embodiment, the chocolate composition comprises no more than 5wt% CBE's.

The chocolate may comprise a cocoa butter substitute (CBS) (sometimes known as a cocoa butter replacer, CBR) in place of some or all of the cocoa butter. Such chocolate compositions are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

The chocolate may comprise at least one vegetable fat that is liquid at standard ambient temperature and pressure (SATP, 25°C and 100kPa). A liquid vegetable fat may be employed when a liquid chocolate composition is desired. Suitable vegetable fats include corn oil, cotton seed oil, rapeseed oil, palm oil, safflower oil, and sunflower oil.

The present invention is further applicable to chocolate in which some or all of the fat is constituted by a partly or wholly non-metabolisable fat, for example Caprenin.

The chocolate comprises at least one sweetener. Such sweeteners include sugars (e.g. sucrose, dextrose, glucose syrup solids, fructose, lactose and maltose and any combination thereof), sugar alcohols (e.g. sorbitol, xylitol, erythritol, mannitol, lactitol, isomalt and maltitol, or any combination thereof), intense sweeteners (e.g. aspartame, acesulfame-K, cyclamates, saccharin, sucralose, neohesperidin, dihydrochalone, alitame, stena sweeteners, glycyrrhizin, or any combination thereof) and any combination of sugars, sugar alcohols and intense sweeteners. In one embodiment the chocolate comprises sucrose.

The first aspect of the invention does not require any specific foodstuff, and any of a wide variety of foodstuffs may be used. Suitable foodstuffs for use in the methods of the second aspect of the invention to produce a food bar according to the first aspect may include any type of foodstuff which is suitable for extrusion to form a food bar according to the invention.

Suitable savoury foodstuffs may include dough (such as bread or bagel dough), cheese or other dairy products (such as processed cheese), cheese-flavoured crackers, and cereal products.

Suitable sweet products may include dough and bakery products (including cake, biscuit etc.), cereal products and confectionery products (including toffee, jelly candy, nougat, chocolate, chewing or bubble gum, marshmallow, Turkish delight and the like).

The product of the invention may be particularly suitable for chewing gum and/or jelly candy. Thus, in some embodiments, the foodstuff comprises chewing gum or bubble gum. The food bar may consist entirely of strands of chewing or bubble gum, or the food bar may comprise strands of chewing or bubble gum and strands of another type of confectionery product. Alternatively or additionally, the food bar may comprise strands of different types of chewing or bubble gum. For example, the food bar may comprise at least two different types of chewing or bubble gum having different flavours, colours or texture.

The chewing gum may comprise a polyol in an amount of from about 30% to about 80%, or from about 50% to about 60% by weight of the chewing gum. Suitable polyols include maltitol, erythritol, xylitol, sorbitol, mannitol, isomalt, lactitol and combinations thereof. The chewing gum may comprise a gum base in an amount of from about 25% to about 45%, from about 28% to about 42%, from about 28% to about 35% or from about 28% to about 35% by weight of the chewing gum. The chewing gum may comprise any suitable gum base including styrene-butadiene copolymers (SBR), polyisobutylene, isobutylene-isoprene copolymers, polyethylene, polyvinyl alcohol (PVA) and the like, and combinations thereof.

Other components of the chewing gum may include elastomers (including natural and symthetic elastomers), wax, elastomer solvents, sweetening agents, colouring agents, emulsifiers, plasticizers or softeners, fillers (such as mineral adjuvants), bulking agents, cooling agents, antioxidants, flavourings, medicaments, acidulants, and the like, and mixtures thereof.

The chewing gum components may be mixed using the standard techniques and apparatus known to those skilled in the art.

In some embodiments, at least one chewing gum strand has a liquid filling. The liquid filling may comprise traditional ingredients, such as flavouring agents and sweeteners, and may may also contain medicaments, breath fresheners, vitamins, minerals, caffeine, fruit juices and the like, and mixtures thereof. The filling may also include a natural or synthetic gum (such as pectin or carboxymethylcellulose), such as to increase viscosity. Chewing gum strands having a liquid filling may be formed by coextrusion, as is known in the art.

Thus, according to some embodiments of the first aspect of the present invention there is provided a confectionery bar having a first end and a second end and a length defined from the first end to the second end;
the confectionery bar comprising a plurality of strands of chewing gum;
wherein at least one strand of chewing gum extends from the first end to the second end and at least one strand is transversely convoluted, and wherein at least one strand is irregularly convoluted.

In some embodiments, the foodstuff comprises jelly candy. The food bar may consist entirely of strands of jelly candy, or the food bar may comprise strands of jelly candy and strands of another type of confectionery product. Alternatively, the food bar may comprise strands of different types of jelly candy. For example, the food bar may comprise at least two different types of jelly candy, wherein the different types of jelly candy have different flavours, colours or texture. The jelly candy may have any suitable composition as is known to the person skilled in the art. In particular, the jelly candy may comprise one or more ingredients selected from gelling agents (such as gelatine, pectin, hydrocolloids, and the like), natural or synthetic colourings, natural or synthetic flavourings (including natural fruit juices), acidity regulators (such as citric or tartaric acids or salts thereof), sugars, and sugar-free sweeteners (such as polyols, aspartame, sucralose, and the like).

In some embodiments, the food bar is for animal consumption and the foodstuff comprises pet food. The pet food may comprise cereal grains (such as corn, wheat, potato and rice), beans (such as soy beans), vegetables, fibre (such as bran, cellulose, soy hulls, husks, shells, beet pulp, and corn cob), coarse bone meal, rawhide, textured vegetable protein, dried meat tissue, meat, fish and poultry products (including textured meat or fish or offal), and coarse mineral sources (such as coarse dicalcium phosphate). The pet food may comprise additional components including soybean flour, corn, wheat, sugar, wheat gluten, corn gluten, dried molasses, wheat flour, milk powder, soybean meal, calcium propionate, salt, glyceryl monostearate, sorbic acid, flavourings, colourings, stabilizers, minerals and vitamins. In some embodiments, the pet food comprises a mixture of 40% to 60% by weight of textured meat or fish and from 30% to 45% of cereal or starch flour, the remainder comprising phosphoric acid, glycerol and hydrolysed whey.

In some embodiments, the food bar comprises a plurality of strands of a non-chocolate foodstuff.

In some embodiments, the foodstuff comprises dough. The dough may be any type of dough, but typically will be made from a mixture of flour, water, yeast and shortening (i.e. hard fat). The dough may also include saccharides, starch-degrading enzyme, corn meal, flavouring agents, colouring agents, preserving agents, stabilizing agents, nutrients, fortifying agents, dough conditioners, emulsifiers, protein, egg components, water binding agents, leavening agents, browning agents, crisping agents, gum, vital wheat gluten, bulking agents and the like. In some embodiments, the dough comprises cheese to give a cheese-flavoured food bar. In some embodiments, the dough has a cheese content of from about 5% to about 60%, from about 10% to about 50% or from about 15% to about 25% by weight, based on the weight of the dough. To produce dough having a stronger cheesy taste, higher amounts of cheese may be used, for example from about 30% to about 40% by weight of dough.

The dough must be suitable for extrusion. In some embodiments, the moisture content of the dough is from about 20% to about 65%, from about 25% to about 60% or from about 40% to about 55% by weight. In some embodiments, the moisture content of the dough may be from about 20% to about 35%. If the dough has too much moisture it will lose its shape as it exits the extruder. If it has too little moisture it will stick to the extruder, die or other equipment. Generally, increased levels of yeast and corn syrup are necessary for extrusion, as compared to conventional dough formulations. In some embodiments, acceptable dough mixtures can be prepared containing about 40% to 80% flour, 15% to 35% water, 0.5% to 3% yeast, 0% to 7% fat, 0% to 10% corn syrup, 0% to 1.5% emulsifier, and 0% to 2.5% salt. The protein content of the dough should be suitable for making an extrudable dough. The protein content may be from 10 wt% to 20 wt%, from 11 wt% to 16 wt%, or from 12 wt% to 14 wt% based on flour.

The flour of the dough may be a hard wheat bread flour made from hard spring or winter wheat. The shortening is preferably a solid, hydrogenated or partially hydrogenated vegetable oil, such as cottonseed, corn, soybean, canola, or a mixture thereof, and similar hydrogenated or partially hydrogenated vegetable oils and mixtures. Preferred vegetable oils include corn, canola, sunflower seed, cottonseed and soybean oils, and mixtures thereof.

Thus, according to some embodiments of the first aspect of the present invention there is provided a food bar having a first end and an opposite second end and a length defined from the first end to the second end;
the food bar comprising a plurality of strands of dough;
wherein at least one strand of dough extends from the first end to the second end and at least one strand of dough is transversely convoluted, and wherein at least one strand is irregularly convoluted.

In some embodiments, the foodstuff comprises processed cheese. The processed cheese may be made from any suitable cheese including mozzarella, emmental, cheddar, edam, or combinations thereof. Processed cheese typically includes water, salt and emulsifiers. Additional components of the processed cheese may include butter, milk protein powder, whey powder, colourings and lactic acid.

Thus, according to some embodiments of the first aspect of the present invention there is provided a food bar having a first end and an opposite second end and a length defined from the first end to the second end;
the food bar comprising a plurality of strands of processed cheese;
wherein at least one strand of processed cheese extends from the first end to the second end and at least one strand of processed cheese is transversely convoluted, and wherein at least one strand is irregularly convoluted.

In some embodiments of the first aspect of the invention, the food bar comprises a filling. The filling may be a liquid, a paste or a solid. The filling may be a savoury filling or a non-savoury filling. Suitable savoury fillings may include meats, processed meat products, dairy products such as cream cheese (including PHILADELPHIA® brand cream cheese), heat-flowable hard or soft cheese, processed cheese, egg products, seafood products, vegetables or vegetable products, processed legume product (such as peanut butter) or combinations thereof. Suitable sweet fillings may include fruits (including dried fruit such as raisins or cranberries etc.), fruit products (e.g. jams, jellies, fruit pastes), chocolate ,fondant crèmes, pralines, truffles, mousses, hazelnut chocolate paste, nuts (whole or pieces), marshmallow, biscuit, wafer, confectionery crisp, Turkish delight, jelly candy, toffee, fudge, hard caramel, nougat or combinations thereof.

It will be understood that the filling may be located within individual strands of foodstuff. For example, the filling may be located in an axial cavity of one or more of the foodstuff strands, such as in all of the foodstuff strands. Such a construction may be obtained for example by coextruding the foodstuff and the filling through concentric nozzles, such that the extruded foodstuff surrounds the extruded filling. Where the filling has suitable internal structure, such as a solid or a gel, the filling may be present as inclusions within the strand, and may be located within the interior of the strand or at the surface.

In one embodiment the filling is extruded together with the foodstuff strands. In an alternative embodiment the filling is incorporated into the food bar after extrusion has taken place. For example, two food bars could be sandwiched together with a filling.

Specific embodiments of the invention will now be described by way of example, with reference to the accompanying Figures, in which:
Figure 1 is a schematic diagram showing strands of foodstuff A to F; and
Figure 2 shows a die head employed in the method of the invention.
Figures 3 to 6 show chocolate bars in accordance with embodiments of the invention

### METHODOLOGY

A foodstuff is extruded through a die having numerous circular apertures and then deposited onto a moving conveyer belt. The foodstuff is extruded more quickly than the conveyer belt is moving so that the foodstuff strands compact together. As shown in Figure 1, continued extrusion of the foodstuff at a speed greater than the speed of the conveyor belt causes the strands of foodstuff to curve and coil.

Chocolate bars in accordance with the invention were prepared using apparatus similar to that described in GB2186836 except that a different die head was employed. Chocolate was extruded through a die having numerous circular apertures and then deposited onto a moving conveyer belt. The chocolate was extruded more quickly than the conveyer belt was moving so that the chocolate strands compacted together.

### Example 1

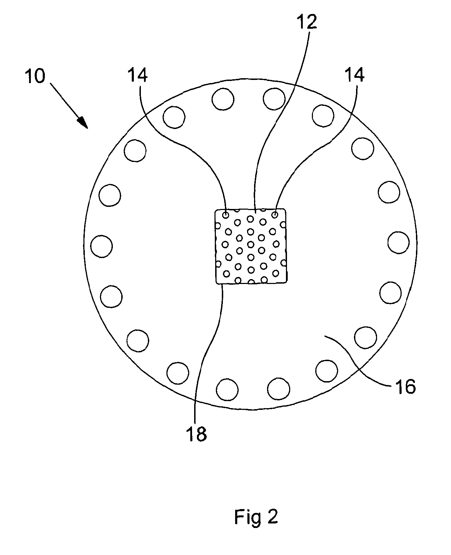

Chocolate was extruded through a die head 10 as shown in Figure 2. The die head comprises a plate 12 having a plurality of apertures 14 therein and a shaping plate 16 attached thereto. The shaping plate 16 has a shaping aperture 18 therein, the aperture 18 being a 17x17 mm square with 1 mm radiussed corners. The shaping aperture 18 reveals 29 circular apertures 14 of diameter 1.83mm (apertures have been counted only if >50% is visible). The chocolate was extruded at a speed of 5.5m/min and deposited onto a conveyer belt moving at a speed of 2.9m/min.

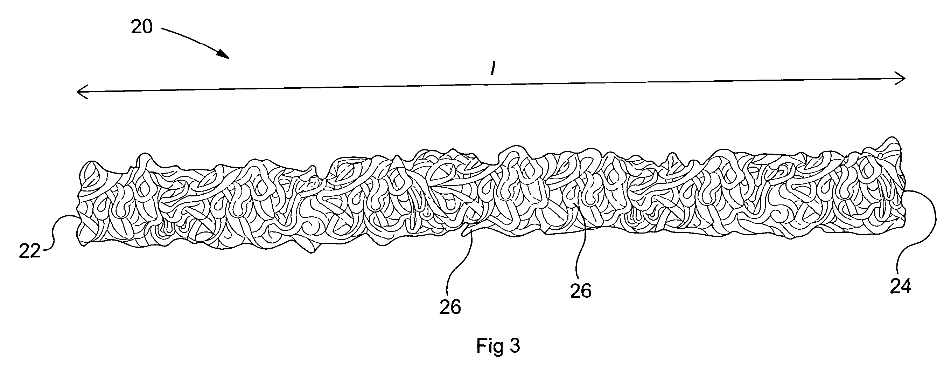

The resulting product 20 is shown in figure 3. It has a length of 150mm, a width of 20.5mm and a height of 14.7mm. The product has a weight of 29.8g and the mean strand diameter is 1.8mm.

Referring to figure 3, the chocolate bar 20 has a first end 22 and a second end 24 and a length I defined from the first end 22 to the second end 24. The chocolate bar 20 comprises a plurality of convoluted chocolate strands 26 and substantially all of the chocolate strands 26 extend from the first end 22 to the second end 24. The chocolate strands 26 are longer than the chocolate bar 10 and so twist and coil between the first and second ends 22, 24. It can be seen that many of the chocolate strands 26 change direction and make contact with themselves and other chocolate strands.

### Example 2

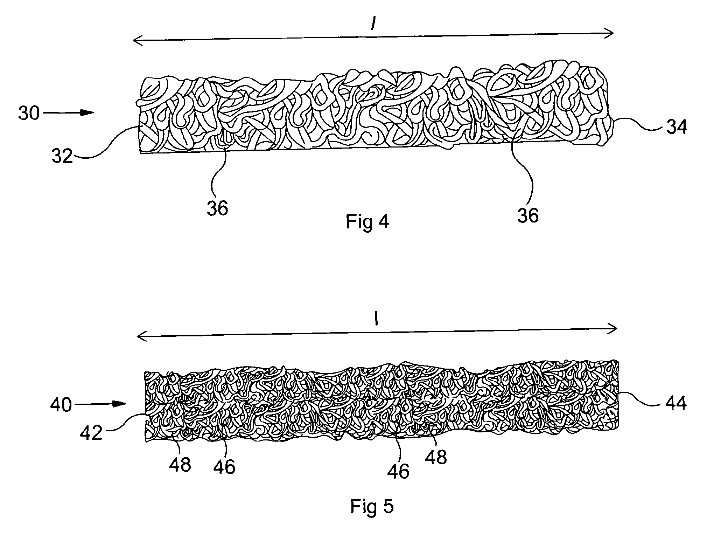

A chocolate bar 30 was produced as described previously (55 apertures, extrusion speed 5.5m/min, belt speed 2.9m/min) and is shown in figure 4. The chocolate bar 30 has a length of 125mm, a width of 32.5mm and a height of 13.5mm. The product has a weight of 40.5g and the mean strand diameter is 1.9mm.

Referring to figure 4, the chocolate bar 30 has a first end 32 and a second end 34 and a length / defined from the first end 32 to the second end 34. The chocolate bar comprises a plurality of chocolate strands 36 and substantially all of the chocolate strands 36 extend from the first end 32 to the second end 34. The chocolate strands 36 are longer than the chocolate bar 30 and so twist and coil between the first and second ends 32, 34. It can be seen that many of the chocolate strands 36 are convoluted since they twist back on themselves. The chocolate strands 36 make contact with one another and themselves.

### Example 3

A chocolate bar 40 was produced as described previously and is shown in figure 5. Referring to figure 5, the chocolate bar 40 has a first end 42 and a second end 44 and a length / defined from the first end 42 to the second end 44. The chocolate bar 40 comprises a plurality of chocolate strands 46 and substantially all of the chocolate strands 46 extend from the first end 42 to the second end 44. The chocolate strands 46 are longer than the chocolate bar and so twist and coil between the first and second ends 42,44. It can be seen that at least some of the chocolate strands 46 are convoluted since they reverse their direction as they loop and twist. The chocolate strands 46 make contact with themselves and one another.

The chocolate bar 40 was produced by extruding through a die having apertures of diameter 1 mm. Whilst a chocolate bar is obtained, the bar is less successful that those shown in figures 3 and 4. Some gaps 48 have formed between the chocolate strands 46 and the bar is not so visually attractive.

### Example 4

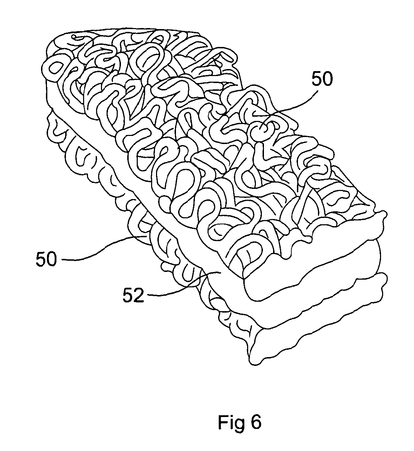

Two chocolate bars 50 are produced as described previously, with the exception of the use of a rectangular shaping plate, so that the bars are substantially rectangular in cross-section. The two bars are layered with a buttercream confectionery filling 52 as shown in Figure 6.

### Example 5

A processed cheese is produced having the following composition:

| | |
|---|---|
| Water/condensate | 35.2 % |
| Mozzarella cheese | 32.3 % |
| Emmental cheese | 9.9 % |
| Butter | 9.6 % |
| Milk protein powder | 9.6 % |
| Emulifying salts | 2.2 % |
| Whey powder | 2.0 % |
| Sodium chloride | 0.5 % |
| Lactic acid | 0.2 % |

The processed cheese is prepared by grinding the cheese, mixing all ingredients, heating the mixture with steam to 85°, and cooling the processed cheese to 75°. Thereafter, the processed cheese is supplied to the extrusion nozzle.

The processed cheese is extruded through a die head 10 as shown in Figure 2. The die head comprises a plate 12 having a plurality of apertures 14 therein and a shaping plate 16 attached thereto. The shaping plate 16 has a shaping aperture 18 therein, the aperture 18 being a 17x17mm square with 1 mm radiussed corners. The shaping aperture 18 reveals 29 circular apertures 14 of diameter 1.83mm (apertures have been counted only if >50% is visible). The processed cheese is extruded at a speed of 15 m/min and deposited onto a conveyer belt moving at a speed of 10 m/min.

Following extrusion the strands of processed cheese are allowed to cool. The resulting food bar comprises a plurality of convoluted processed cheese strands. Substantially all of the strands extend from the first end to the second end of the bar. The processed cheese strands are longer than the food bar and so twist and coil between the first and second ends. Many of the strands change direction and make contact with themselves and other strands.

### Example 6

Cheese curd is diced and loaded into a direct steam injection cooker/mixer. Dairy proteins concentrate powder, calcium milk powder, sodium citrate, colouring agents and water are added into the cooker/mixture and mixed for 1 minute at 30rpm. Steam is used to melt and emulsify the cheese mass. Heating and mixing is continued until the cheese mass reaches 65°C. Mixing is then continued without heating for another 1.5 minutes at 55 rpm to complete homogenisation. The cheese is then loaded into an extruder and is extruded through a die head comprising 15mm diameter apertures. The processed cheese is extruded at a speed of 19m/min and deposited onto a conveyer belt moving at a speed of 10m/min.

The resulting product comprises a plurality of strands of cheese. Substantially all of the strands extend from the first end to the second end of the bar. The cheese strands are longer than the food bar and so twist and coil between the first and second ends, forming a visually attractive product. The bar is cooled before packaging and storing under refrigeration.

### Example 7

A dough is produced having the following composition. All amounts are expressed as a percentage of the weight of flour:

| | |
|---|---|
| Flour | 100 % |
| Vital wheat Gluten | 3.0 % |
| Granulated salt | 2.5 % |
| Instant dry yeast | 2.95 % |
| Dried egg albumin | 1.0 % |
| Novamyl Enzyme | 0.32 % |
| Calcium propionate | 0.32 % |
| Guar gum | 0.22 % |
| Water | 56.0 % |
| Corn syrup | 13.0 % |
| Shortening | 11.0 % |
| Mono & diglycerides | 1.0 % |

The flour and dry ingredients are mixed under low speed for about one minute. The mixture is stopped and the shortening, monoglycerides and diglycerides are added. Mixing is resumed under low speed for 1 minute while adding the corn syrup and water. Mixing is continued under high speed for a further 8-12 minutes, depending on batch size.

The dough is extruded through a die head comprising a plate having a plurality of apertures therein. The dough is extruded at a speed of 15 m/min and deposited onto a conveyer belt moving at a speed of 10 m/min.

The resulting product comprises a plurality of strands of dough. Substantially all of the strands extend from the first end to the second end of the bar. The dough strands are longer than the food bar and so twist and coil between the first and second ends, forming a visually attractive product. Many of the strands change direction and make contact with themselves and other strands.

The food bars are placed in baking pans with perforations and proofed at between 40°C and 46°C at 30-40% relative humidity for about 25-30 minutes. The proofed products are then baked at temperatures of between about 280 °C to 320 °C.

### Example 8

Cheese-flavoured snacks are prepared having the following composition:
Stage 1 ingrdients:

| | |
|---|---|
| Water | 18.7 wt% |
| Sodium stearoyl Lactylate | 0.21 wt% |
| Oil | 3.51 wt% |
| Colouring | 0.16 wt% |

Stage 2 ingredients:

| | |
|---|---|
| Cheddar cheese | 14.96 wt% |
| Yeast (in solution) | 0.14 wt% |
| Water (for yeast solution) | 0.58 wt% |
| Dough salt | 0.58 wt% |
| Calcium phosphate monobasic | 0.26 wt% |
| Lactic acid | 0.14 wt% |

Stage 3 ingredients:

| | |
|---|---|
| Wheat flour | 58.42 wt% |
| Maize Starch | 2.34 wt% |

The stage 1 ingredients are mixed for about 2 minutes at about 20 rpm. The stage 2 ingredients are then added and mixed for a further 2 minutes at about 20 rpm., followed by addition of the stage 3 ingredients within mixing for an additional 5 minutes at 40 rpm to obtain a substantially homogeneous dough. The dough is fed into an extruder. The dough is extruded through a die head comprising a plate having a plurality of apertures therein, the apertures having a diameter of 6mm. The dough is extruded at room temperature at a speed of 15m/min and deposited onto a conveyer belt moving at a speed of 8m/min.

The resulting product comprises a plurality of strands of dough. Substantially all of the strands extend from the first end to the second end of the bar. The dough strands are longer than the food bar and so twist and coil between the first and second ends, forming a visually attractive product. Many of the strands change direction and make contact with themselves and other strands.

The product is preheated at temperatures of about 90°C to about 110°C and baked at temperatures of from about 200°C to about 250°C. The baked product is then dried at about 90°C to about 110°C to obtain a moisture content of about 3% by weight.

### Example 9

A chewing gum is produced having the following composition:

| | |
|---|---|
| Gum base | 28-42%, including 3-11% talc |
| Lecithin | 0.25% |
| Maltitol | 52-55% |
| Flavours | 2.5% |
| Cooling agent | 0.08% |
| Acidulants | 1.2% |
| Intense sweetener | 3.4% |

The composition is prepared by first combining the talc with the gum base at about 85 °C. The combination is then mixed with the maltitol and lecithin for 6 minutes. The Flavours and cooling agent are added and mixed for 1 minute. Finally, the acidulants and intense sweetener are added and mixed for a further 5 minutes.

The chewing gum is extruded through a die head comprising a plate having a plurality of apertures therein, the apertures having a diameter of 2 mm. The chewing gum is extruded at a speed of 20 m/min and deposited onto a conveyer belt moving at a speed of 12 m/min.

The resulting bar comprises a plurality of strands of chewing gum. Substantially all of the strands extend from the first end to the second end of the bar. The chewing gum strands are longer than the bar and so twist and coil between the first and second ends, forming a visually attractive product. Many of the strands change direction and make contact with themselves and other strands.

### Example 10 - Liquid-filled chewing gum

A chewing gum is produced having the following composition:

| | |
|---|---|
| Gum base | 28-42%, including 3-11% talc |
| Lecithin | 0.05% |
| Maltitol | 46-50% |
| Sorbitol | 5-10 |
| Lycasin | 0.25 |
| Flavours | 2.26% |
| Cooling agent | 0% |
| Acidulants | 0% |
| Intense sweetener | 3.4% |

A liquid filling is prepared having the following composition:

| | |
|---|---|
| Glycerin | 63% |
| Lycasin | 29.26% |
| Sorbitol solution | 3.25% |
| Sodium carboxymethyl cellulose | 0.08% |
| Colourings | 0.004% |
| Flavours | 1.3% |
| Cooling agent | 0.06% |
| Citric Acid | 3.00% |
| Intense sweetener | 0.05% |

The chewing gum composition is prepared by mixing the components as described in Example 9. The liquid filling is prepared by first preparing a pre-mix of the sodium carboxymethyl cellulose, glycerine and polyols. This pre-mix is then combined with the colourings, flavours, acids, intense sweetener and mixed.

The gum and filling compositions are extruded together through a die head comprising a plate having a plurality of apertures therein, the apertures having an outer diameter of 4 mm. The chewing gum and filling is extruded at a speed of 20m/min and deposited onto a conveyer belt moving at a speed of 12m/min.

The resulting bar comprises a plurality of strands of chewing gum. Substantially all of the strands extend from the first end to the second end of the bar. The chewing gum strands are longer than the bar and so twist and coil between the first and second ends, forming a visually attractive product. Many of the strands change direction and make contact with themselves and other strands.

## Claims

1. A food bar having a first end and a second end and a length defined from the first end to the second end;
the food bar comprising a plurality of strands of foodstuff;
wherein at least one strand of foodstuff extends from the first end to the second end and at least one strand of foodstuff is transversely convoluted, and wherein at least one strand is irregularly convoluted.

2. A food bar as claimed in claim 1, wherein the at least one strand of foodstuff is a strand of a non-chocolate foodstuff.

3. A food bar as claimed in claim 1 or claim 2, having a flat base.

4. A food bar as claimed in claim 3, wherein at least 50% of the strands of foodstuff are substantially parallel to the base along at least 75% of the length of each strand.

5. A food bar as claimed in any one of claims 1 to 4, wherein the bar comprises a layer of convoluted strands.

6. A food bar as claimed in claim 5, comprising a plurality of layers of convoluted strands.

7. A food bar as claimed in any one of claims 1 to 6, wherein at least one strand of foodstuff is longer than the food bar.

8. A method of producing a food bar as claimed in any one of claims 1 to 7, comprising extruding a foodstuff through a die having a plurality of apertures therein to form a plurality of strands of foodstuff;
supplying the strands of foodstuff to a deposit location, wherein the strands of foodstuff are moving at a first speed;
depositing the strands of foodstuff from the deposit location onto a surface that is continuously moving away from the deposit location to form the food bar, the surface moving away from the deposit location at a second speed;
wherein the first speed is greater than the second speed.

9. The method as claimed in claim 8, wherein the foodstuff is continuously extruded through the die to produce a long food bar that is subsequently cut into portions of a desired length.

10. The method as claimed in claim 8 or claim 9, wherein the continuously moving surface is a conveyor.

11. The method as claimed in any one of claims 8 to 10, wherein the first speed is at least 50% greater than the second speed.

## Patentansprüche

1. Essriegel, aufweisend ein erstes Ende und ein zweites Ende und eine Länge, die von dem ersten Ende zu dem zweiten Ende definiert ist;
wobei der Essriegel eine Vielzahl von Strängen von Nahrungsmitteln umfasst;
wobei sich mindestens ein Strang von Nahrungsmitteln von dem ersten Ende zu dem zweiten Ende erstreckt und mindestens ein Strang von Nahrungsmitteln quer gewunden ist und wobei mindestens ein Strang unregelmäßig gewunden ist.

2. Essriegel nach Anspruch 1, wobei der mindestens eine Strang von Nahrungsmitteln ein Strang aus einem nicht schokoladigen Nahrungsmittel ist.

3. Essriegel nach Anspruch 1 oder Anspruch 2, der eine flache Grundfläche aufweist.

4. Essriegel nach Anspruch 3, wobei mindestens 50 % der Stränge von Nahrungsmitteln entlang mindestens 75 % der Länge jedes Strangs im Wesentlichen parallel zu der Grundfläche verlaufen.

5. Essriegel nach einem der Ansprüche 1 bis 4, wobei der Riegel eine Schicht aus gewundenen Strängen umfasst.

6. Essriegel nach Anspruch 5, umfassend eine Vielzahl von Schichten aus gewundenen Strängen.

7. Essriegel nach einem der Ansprüche 1 bis 6, wobei mindestens ein Strang von Nahrungsmitteln länger ist als der Essriegel.

8. Verfahren zur Herstellung eines Essriegels nach einem der Ansprüche 1 bis 7, umfassend das Extrudieren eines Nahrungsmittels durch eine Form, die darin eine Vielzahl von Öffnungen aufweist, um eine Vielzahl von Strängen aus Nahrungsmitteln zu formen;
Liefern der Stränge von Nahrungsmitteln zu einer Ablagestelle, wobei sich die Stränge von Nahrungsmitteln mit einer ersten Geschwindigkeit bewegen;
Ablegen der Stränge von Nahrungsmitteln von der Ablagestelle auf eine Fläche, die sich kontinuierlich von der Ablagestelle wegbewegt, um den Essriegel zu formen, wobei sich die Fläche mit einer zweiten Geschwindigkeit von der Ablagestelle wegbewegt;
wobei die erste Geschwindigkeit größer ist als die zweite Geschwindigkeit.

9. Verfahren nach Anspruch 8, wobei das Nahrungsmittel kontinuierlich durch die Form extrudiert wird, um einen langen Essriegel zu erzeugen, der anschließend in Portionen mit einer gewünschten Länge geschnitten wird.

10. Verfahren nach Anspruch 8 oder Anspruch 9, wobei die sich kontinuierlich bewegende Fläche eine Fördereinrichtung ist.

11. Verfahren nach einem der Ansprüche 8 bis 10, wobei die erste Geschwindigkeit mindestens 50 % größer ist als die zweite Geschwindigkeit.

## Revendications

1. Barre alimentaire présentant une première extrémité et une seconde extrémité et une longueur définie entre la première extrémité et la seconde extrémité ;
la barre alimentaire comprenant une pluralité de cordons de produit alimentaire ;
au moins un cordon de produit alimentaire s'étendant de la première extrémité jusqu'à la seconde extrémité et au moins un cordon de produit alimentaire présentant des sinuosités transversales, et au moins un cordon présentant des sinuosités irrégulières.

2. Barre alimentaire selon la revendication 1, dans laquelle l'au moins un cordon de produit alimentaire est un cordon de produit alimentaire autre que du chocolat.

3. Barre alimentaire selon la revendication 1 ou la revendication 2, présentant une base plate.

4. Barre alimentaire selon la revendication 3, dans laquelle au moins 50 % des cordons de produit alimentaire sont sensiblement parallèles à la base sur au moins 75 % de la longueur de chaque cordon.

5. Barre alimentaire selon l'une quelconque des revendications 1 à 4, dans laquelle la barre comprend une couche de cordons sinueux.

6. Barre alimentaire selon la revendication 5, comprenant une pluralité de couches de cordons sinueux.

7. Barre alimentaire selon l'une quelconque des revendications 1 à 6, dans laquelle au moins un cordon de produit alimentaire est plus long que la barre alimentaire.

8. Procédé de production d'une barre alimentaire selon l'une quelconque des revendications 1 à 7, comprenant :
l'extrusion d'un produit alimentaire à travers une matrice présentant une pluralité d'ouvertures permettant de former une pluralité de cordons de produit alimentaire ;
l'apport des cordons de produit alimentaire vers un emplacement de dépôt, les cordons de produit alimentaire étant transportés à une première vitesse ;
le dépôt des cordons de produit alimentaire, depuis l'emplacement de dépôt, sur une surface qui s'éloigne en continu de l'emplacement de dépôt, afin de former la barre alimentaire, la surface s'éloignant de l'emplacement de dépôt à une seconde vitesse ;
la première vitesse étant supérieure à la seconde vitesse.

9. Procédé selon la revendication 8, dans laquelle le produit alimentaire est extrudé en continu par la matrice pour produire une longue barre alimentaire qui est ensuite coupée en portions de longueur voulue.

10. Procédé selon la revendication 8 ou la revendication 9, dans laquelle la surface de transport continu est une bande transporteuse.

11. Procédé selon l'une quelconque des revendications 8 à 10, dans laquelle la première vitesse est au moins 50 % supérieure à la seconde vitesse.
